# EUROPÄISCHE PATENTSCHRIFT

(11) **EP 2 904 547 B1**
(45) Veröffentlichungstag und Bekanntmachung des Hinweises auf die Patenterteilung: **23.11.2016**
(21) Anmeldenummer: 13756820.0
(22) Anmeldetag: 23.08.2013
(51) Int. Cl.: G06K 19/02, G06K 19/073

(54) **BEDRUCKBARES GEWEBEVERSTÄRKTES INLAY**
PRINTABLE FABRIC REINFORCED INLAY
INCRUSTATION RENFORCÉE DE TISSU ET IMPRIMABLE

(30) Priorität: 01.10.2012 DE 102012019308
(43) Veröffentlichungstag der Anmeldung: 12.08.2015
(73) Patentinhaber: Giesecke & Devrient GmbH, 81677 München (DE)
(72) Erfinder: RIEDL, Josef, 85395 Attenkirchen (DE); HUBER, Peter, 82256 Fürstenfeldbruck (DE); KOHL, Klaus, 83714 Miesbach (DE)
(86) Internationale Anmeldenummer: PCT/EP2013/002550
(87) Internationale Veröffentlichungsnummer: WO 2014/053203

(56) Entgegenhaltungen:
- WO-A1-2007/101663
- DE-A1-102008 010 530
- US-B1- 6 482 495

## Beschreibung

Gegenstand der Erfindung sind flexible, in Folienform bereitgestellte Inlays für kleinformatige tragbare Datenträger, die z.B. in Form einer Karte von einem Nutzer jederzeit mitgeführt werden können. Gegenstand der Erfindung sind insbesondere mit einem IC versehene Ausweiskarten oder Datenseiten für Passbücher, die mit einer Schnittstelle zur Kommunikation mit einem Lesegerät ausgestattet sind.

Aus der EP 1 812 244 B1 ist ein Inlay für ein Personaldokument in Heftform bekannt, das auf einer textilen Schicht beruht, die zweckmäßig beidseitig mit einer Haftvermittlungsschicht versehen ist. Der entstehende Schichtenverbund bildet eine Kernlage. In die Kernlage ist ein RFID-Element mit einem IC integriert, zudem sind auf die Kernlage beidseitig weitere thermoplastische Kunststoffschichten aufgebracht. Die Verbindung der Kernlage und der weiteren Kunststoffschichten erfolgt durch Laminieren. Durch die Haftvermittlungsschichten entsteht dabei eine starke Verbindung zwischen der Kernlage und den weiteren Kunststoffschichten, die mit einfachen Mitteln nicht ohne weiteres aufgetrennt werden kann. Die Schutzwirkung hängt allerdings alleine von der Festigkeit der zwischen den Haftvermittlungsschichten und den weiteren Schichten entstehenden Verbindung ab.

Aus der WO 2007/101 663 A1 ist eine mehrschichtige Datenseite bekannt, die eine Substratschicht zur Aufnahme eines Transpondermoduls aufweist sowie eine Klebemittelschicht, mittels derer sie mit einer Deckelseite zum Beispiel eines Passbuchs verbunden wird. In die der Klebemittelschicht zugewandte Oberseite der Substratschicht ist teilweise eine Faserschicht einlaminiert, so dass ein Teil der Fasern aus der Substratschicht hervorsteht und dort eine Verzahnung oder Verhakung bildet, die in die Klebemittelschicht greift. Die Faserschicht kann insbesondere ein Vlies oder ein Spinnvlies sein oder eine Anhäufung einer Vielzahl von Einzelfasern. Die Lösung schafft eine gute Verbindung zwischen den Schichten, in die die Faserschicht eindringt.

Aus der US 6482495B1 ist ein Informationsträger mit einem IC-Chip bekannt, der auf einem Vlies basiert, in das der IC-Chip eingebettet ist. In einer Variante werden zunächst zwei Teilfolien hergestellt, indem jeweils ein Vlies von der Oberseite her mit einer Schmelze beschichtet wird, die in die obersten Schichten des Vlieses eindringt. Die vollständig von der Schmelze gebildeten Oberflächen der beschichteten Vliese werden geglättet. Zwischen die resultierenden Teilschichten wird nachfolgend der IC-Chip plaziert, wobei die geglätteten Oberflächen nach außen weisen. Die danach vorliegende Anordnung wird sodann laminiert. Der Informationsträger ist langlebig und erlaubt dank seiner glatten Oberflächen zugleich das Aufbringen besonders schöner Drucke.

Aus dem "RFID-Handbuch" von K. Finkenzeller, Carl-Hanser-Verlag München, 5. Auflage 2008, sind Aufbau, Herstellung und Funktionsweise von Transponder- Systemen bekannt.

Es ist Aufgabe der Erfindung, ein Inlay für einen Datenträger anzugeben, das nach Einbau das Wiederheraustrennen aus einem Datenträger weiter erschwert.

Diese Aufgabe wird gelöst durch ein gewebeverstärktes Inlay mit den Merkmalen des Hauptanspruchs. Diese Aufgabe wird ebenfalls gelöst durch ein Verfahren zur Herstellung eines gewebeverstärkten Inlays mit den Merkmalen des Anspruchs 11.

Das erfindungsgemäße Inlay hat den Vorteil, dass es die Einstellung unterschiedlicher Haftverbundwerte zwischen dem Inlay und angrenzenden Kunststoffschichten erlaubt. Dadurch ist ein beschädigungsfreies Auftrennen selbst dann nicht möglich, wenn es einem Angreifer gelingt, den Verbund zwischen dem Inlay und den angrenzenden Schichten an einer ersten Stelle zu lösen. Denn beim vollständigen Ablösen würde es zu Beschädigungen an den aufgetrennten Flächen in solchen Bereichen kommen, in denen ein anderer Haftungsverbundwert eingestellt war. Zusätzlich erheblich erschwert wird das Auftrennen dadurch, dass die Oberflächen des Inlays profiliert sind.

Ein weiterer Vorteil des erfindungsgemäßen Inlays ist, dass es mechanisch sehr stabil, reißfest und flexibel ist und zugleich eine sehr gute Unterlage für Druckstrukturen bildet. Es lässt sich dadurch wie ein Substrat handhaben, um darauf unmittelbar drucktechnisch elektronische Leiterbahnen oder andere druckbare elektronische Bauelemente aufzubringen. Insbesondere kann auf das erfindungsgemäße Inlay eine gedruckte Antennenspule zur kontaktlosen Kommunikation mit einem Lesegerät aufgebracht werden. Auf diese Weise kann ein sehr flexibler Träger mit aufgedruckter Antennenspule, mithin eine flexible Antennenspule bereitgestellt werden.

Die unmittelbare Bedruckbarkeit des Inlays hat den weiteren Vorteil, dass eine gesonderte Substratschicht nicht erforderlich ist. Entsprechend ergibt sich eine Platzersparnis und kann der fertige Datenträger dünner ausgeführt werden oder zusätzliche Schichten aufweisen.

In vorteilhafter Weise verhilft das erfindungsgemäße Inlay einem damit ausgestatteten Datenträger zu einer hohen mechanischen Stabilität, insbesondere gegenüber Biegebeanspruchungen. Durch Herausführen des Inlays über einen Rand des Datenträges lässt sich zudem in einfacher Weise eine Befestigungslasche bereitstellen, die dünn, flexibel und lange haltbar ist.

Die Gewebeschicht kann vorteilhaft zugleich als Sicherheitsmerkmal oder als Träger für Sicherheitsmerkmale verwendet werden. Beispielsweise können die Fäden der Gewebeschicht ein Sicherheitsmerkmal tragen, indem sie Merkmalsstoffe enthalten oder indem sie lichtleitend ausgeführt sind.

Das erfindungsgemäße Inlay besitzt weiterhin durch seine profilierte Oberfläche eine charakteristische Optik, die ein Echtheitsmerkmal bildet. Bei Ausführung mit zwei Gewebeschichten kann das erfindungsgemäße Inlay zudem mit einer charakteristischen Optik versehen werden, die ebenfalls ein Echtheitsmerkmal bildet.

Ein Ausführungsbeispiel des erfindungsgemäßen Inlays wird nachfolgend unter Bezugnahme auf die Zeichnung näher erläutert.

Es zeigen:
Fig. 1 einen Querschnitt durch eine Datenseite eines elektronischen Passes,
Fig. 2 eine Aufsicht auf ein Gewebematerial für ein Inlay,
Fig. 3 im Querschnitt das Verhalten einer Datenseite bei einem Auftrennungsversuch,
Fig. 4 eine Aufsicht auf ein mit einer Antennenspule bedrucktes Inlay,
Fig. 5 eine Anordnung zur Erzeugung einer Inlay-Folie durch Extrusion, und
Fig. 6 eine Anordnung zur Erzeugung eines Inlay-Folie durch Laminieren.

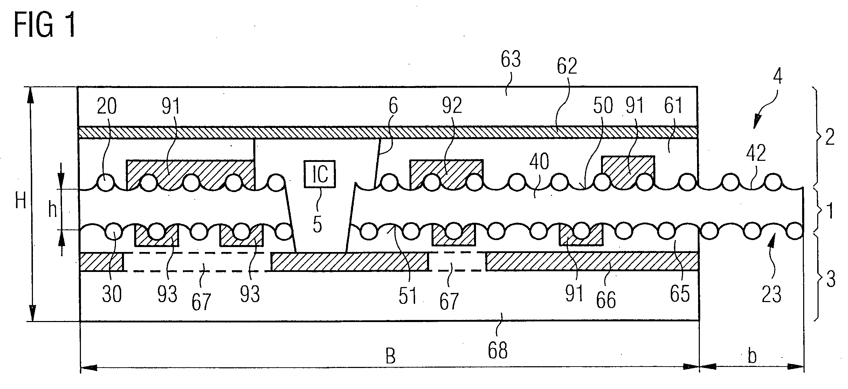

Für die folgende Beschreibung wird stets davon ausgegangen, dass das erfindungsgemäße Inlay in einer Datenseite für ein Paßbuch eingesetzt wird, wie in Fig. 1 gezeigt. Die Verwendung des Inlays ist auf diese Verwendung aber nicht beschränkt. Es eignet sich vielmehr ebenso für andere kleinformatige, mehrschichtige tragbare Datenträger, deren Aufbau auf einem Zusammenfügen von Folien basiert, z.B. für Chipkarten, SIM-Karten, Speicherkarten oder Ausweiskarten. Alle in den Figuren gezeigten Dimensionen verstehen sich ferner nicht maßstabsgerecht, sondern dienen nur zur Veranschaulichung grundsätzlicher Sachverhalte.

Die in Fig. 1 im Querschnitt dargestellte Datenseite 100 besteht aus einem Inlay 1 sowie einem oberen Schichtaufbau 2 und einem unteren Schichtaufbau 3, die mit dem Inlay 1 dauerhaft verbunden sind. Die Datenseite 100 ist flächig ausgebildet und trägt Informationen, die typischerweise eine Person kennzeichnen. Sie besitzt vorgegebene Außenabmessungen und ist dazu bestimmt, in ein Paßbuch eingenäht zu werden. Dazu besitzt sie einen Befestigungsbereich 4, der dünner ist als die übrige Datenseite 100 und an einer Längsseite hervorsteht. Der Befestigungsbereich 4 ist flexibel ausgeführt, so dass eine Datenseite 100 im eingenähten Zustand umgeblättert werden kann. Der Befestigungsbereich 4 ist gebildet, indem das Inlay 1 als überstehende Lasche ausgebildet ist. Entsprechend genügen der obere Schichtaufbau 2 und der untere Schichtaufbau 3 den vorgegebenen Außenabmessungen, während die Datenseite 100 im Befestigungsbereich 4 insgesamt größer ist als die vorgegebenen Außenabmessungen.

Die Datenseite 100 hat typischerweise eine Gesamthöhe H von 500 µm bis 1000 µm, bevorzugt von 650 µm bis 850 µm. Zweckmäßig werden die Datenseiten 100 zunächst in Doppel- oder Mehrfachnutzen bereitgestellt, wobei ein Doppelnutzen mit überstehender Lasche beispielsweise Abmessungen von 26,6 cm x 9,9 cm haben kann. Die Breite B einer fertigen Einzeldatenseite beträgt 5 cm bis 10 cm, vorzugsweise 7 bis 9 cm, besonders zweckmäßig 8,5 cm; die Breite b des Befestigungsbereiches b beträgt 0,2 cm bis 2 cm, vorzugsweise 0, 5 bis 1,0 cm; besonders zweckmäßig 0,8 cm.

In die Datenseite 100 ist eine Transponderanordnung mit einem IC 5 und einer damit verbundenen Antennenspule 91 integriert. Der IC 5 ist in einer Ausnehmung 6 plaziert, die sich durch das Inlay 1 sowie jeweils über einen Teil des oberen Schichtaufbaus 2 und des unteren Schichtaufbaus 5 erstreckt. Die Antennenspule 91 ist drucktechnisch in Form einer ersten Druckstruktur 9 auf die obere Oberfläche 50 des Inlays 1 aufgebracht. Die Druckstruktur 9 ist dabei typischerweise ein System, das die Bestandteile: Primer, Spulenfarbe, Spulenpad sowie bei Bedarf Einbettungslack oder Klebelack umfasst. Die Antennenspule 91 kann zudem mehrfach gedruckt sein. Die Endpunkte der Antennenspule 91 liegen an der Ausnehmung 6, wo die Antennenspule 91 mit dem IC 5 verbunden wird. Auf die untere Oberfläche 51 des Inlays 1 ist eine zweite Druckstruktur 11 aufgebracht. Die zweite Druckstruktur 11 bildet im Ausführungsbeispiel der Fig. 1 ein aus geometrische Formen und/ oder alphanumerische Zeichen bestehendes Design 93.

Die Druckstrukturen 9,11 können jeweils weitere Druckelemente umfassen. Beispielsweise kann auf der Oberfläche 50 neben der Antennenspule 91 auch noch Leiterbahnen 92 aufgedruckt sein oder auf der unteren Oberfläche 51 können neben dem Design ebenfalls Teile der Antennenspule 91 aufgedruckt sein. Auch können andere druckbare elektronische Bauelemente aufgedruckt sein, etwa elektrische Leiterbahnen.

Das Inlay 1 ist eine flexible Sandwichstruktur. Es umfasst eine erste Gewebeschicht 20 sowie eine zweite Gewebeschicht 30, zwischen denen eine Kunststoffschicht 40 angeordnet ist. Die Höhe h des Inlays 1 beträgt zweckmäßig 50 µm bis 250 µm.

Die Flächenabmessungen des Inlays 1 entsprechen in einer zweckmäßigen Ausführung - von der im folgenden stets ausgegangen wird - den für eine Datenseite 100 vorgegebenen Außenabmessungen zuzüglich des Befestigungsbereichs 4. Alternativ können die Flächenabmessungen des Inlays 1 auch etwas kleiner gewählt sein als die vorgegebenen Außenabmessungen, so dass das Inlay 1 bis auf die Seite, an der es den Befestigungsbereich 4 bildet, in die fertige Datenseite 100 integriert ist; das Inlay 1 ist dann bis auf den Befestigungsbereich 4 nicht Teil der umlaufenden Kante der Datenseite 100. In einer weiteren Variante ist das Inlay 1 deutlich kleiner dimensioniert als die Datenseite 100, so dass es in der Datenseite 100 einen an einem Rand überstehenden Streifen bildet.

Im folgenden wird stets von einem Inlay 1 mit einer Kunststoffschicht 40 und zwei Gewebeschichten 20, 30 ausgegangen, wie es in Fig. 1 dargestellt ist. Grundsätzlich ist es aber ebenso möglich, ein Inlay 1 mit nur einer Gewebeschicht 20 oder 30 herzustellen und zu verwenden.

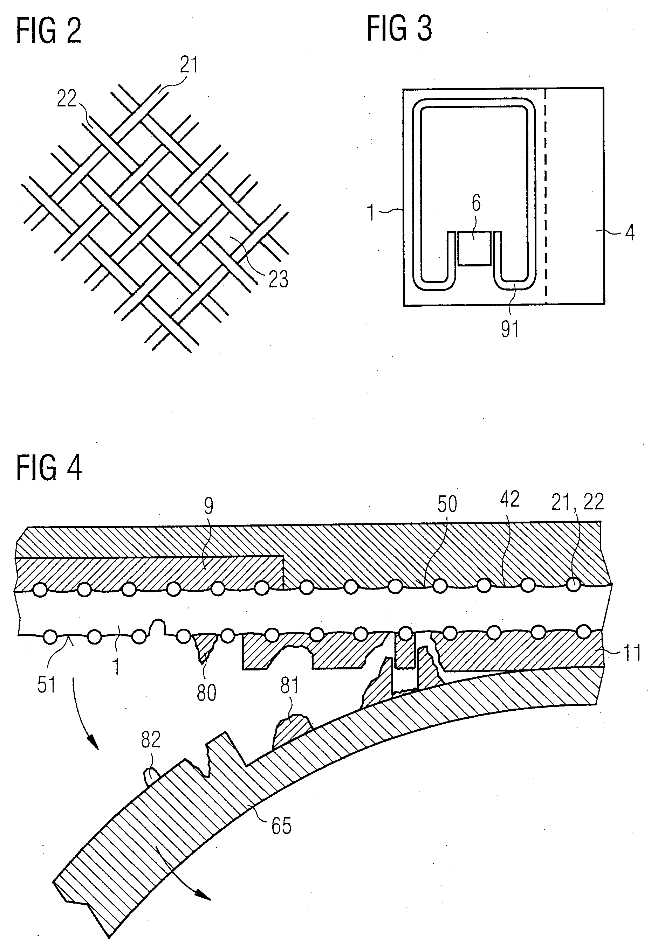

Die Gewebeschichten 20, 30 basieren, wie in Fig. 2 dargestellt, auf einem offenporigen Gewebematerial mit einer Gewebestruktur, die von Fäden 21, 22 gebildet wird, zwischen denen Maschen 23 ausgebildet sind. Die Dicke der Fäden beträgt z.B. 40 µm, die Breite der Maschen z.B. 10 µm. Zweckmäßig bestehen die Gewebeschichten 20,30 aus einem Kunststoffgewebe, z.B. einem Polyestergewebe oder einen Polyamidgewebe oder einem Gewebe aus anderen technischen Kunststoffen. Andere Gewebematerialien, z.B. auf Naturfaserbasis, kommen aber ebenso in Frage. Die Fäden 21, 22 können Sicherheitsmerkmale tragen. Sie können beispielsweise Zusatzstoffe enthalten, die Sicherheitselemente bilden, etwa IR- oder UV-anregbare Stoffe. In das Gewebematerial können auch besondere Fäden eingewebt sein, die Sicherheitselemente bilden, z.B. metallische Fäden. Die Fäden 21, 22 des Gewebematerials können transparent oder opak, z.B. weiß sein; sie können auch semitransparent sein. Die Gewebeschichten 20, 30 sind flexibel.

Die Kunststoffschicht 40 basiert auf einem üblichen Kunststoffmaterial 41, wie es für die Herstellung von Ausweiskarten eingesetzt wird. Das Kunststoffmaterial 41 der Kunststoffschicht 40 kann insbesondere Polycarbonat, PEC, PET, PETG, PVC, ABS oder ähnliches sein. Das Kunststoffmaterial 41 kann ebenfalls mit Zusatzstoffen versehen werden, die Sicherheitselemente bilden, z.B. UV-anregbare Stoffe.

Die Gewebeschichten 20, 30 und die Kunststoffschicht 40 sind innig miteinander verbunden, so dass ein Trennen der Schichten 20,30,40 nur zerstörend möglich ist. Die Gewebeschichten 20, 30 sind teilweise in die Kunststoffschicht 4 eingearbeitet, derart, dass die Fäden 20, 21, bezogen auf ihren Querschnitt, zu einem Teil in dem Kunststoffmaterial 41 liegen und zu einem Teil daraus hervorstehen. Die Kunststoffschicht 40 füllt dabei die Maschen 23 des Gewebes der Gewebeschichten 20,30 in der Weise aus, dass die Fäden 21, 22 der Gewebeschichten 20, 30 mit einem Teil ihres Volumens aus der Kunststoffschicht 40 hervorstehen und die Gewebestruktur erkennbar ist. Zwischen den hervorstehenden Fäden 20, 21 liegen in der Regel muldenartige Zwischenflächen 42 von Kunststoffmaterial 41.

Die Verbindung der Gewebeschichten 20, 30 und der Kunststoffschicht 40 erfolgt mithin so, dass das Inlay 1 geschlossene Oberflächen 50, 51 erhält, die jedoch profiliert sind und von zwei Materialien gebildet werden, nämlich dem Gewebematerial und dem Kunststoffmaterial 41. Die Profilierung wird zum einen von der erhabenen Gewebestruktur der Gewebeschichten 20, 30 gebildet und zum anderen von dazwischen liegendem Kunststoffmaterial 41 der Kunststoffschicht 40. Die Profilierung der Oberflächen 50, 51 ist in der Regel haptisch und optisch erkennbar. Der Grad der Profilierung lässt sich über die Materialparameter der Gewebematerials und des Kunststoffmaterials 41 sowie durch die Art und Weise der Herstellung des Inlays 1 einstellen.

Die Profilierung der Oberflächen 50,51 kann ganz oder teilweise in einer charakteristischen Struktur ausgeführt sein, die ein Echtheitsmerkmal bildet. Dazu wird beispielsweise ein Gewebematerial eingesetzt, dessen Gewebestruktur webtechnische Sicherheitsmerkmale aufweist, z.B. besonders geformte Maschen 23 oder variierende Fadenstärken.

Wird für die Kunststoffschicht 40 ein transparentes Kunststoffmaterial 41 verwendet, kann leicht erreicht werden, dass das Inlay 1 durch das Zusammenwirken der beiden Gewebeschichten 20, 30 einen Moire-Effekt zeigt. Dieser bildet unmittelbar ein Echtheitsmerkmal.

Auf die profilierte Oberflächen 50,51 des Inlays 1 werden die Druckstrukturen 9,11 direkt aufgebracht. Eingesetzt werden dazu übliche Druckverfahren. Die Druckstrukturen 9,11 sind insbesondere Siebdrucke oder Offsetdrucke. insbesondere Offset- oder Siebdruck. Die Druckstrukturen 9,11 überdecken sowohl die erhabene Gewebestruktur der Oberflächen 50, 51 als auch Zwischenflächen 42. Unterschiedliche Druckstrukturen 9,11 bzw. unterschiedliche Druckelemente 91, 92, 93 einer Druckstruktur können in unterschiedlichen Druckverfahren aufgebracht sein. Gedruckt werden können insbesondere elektronische Bauelemente in Form von Antennenspulen oder elektrischen Leiterbahnen sowie Designs, d.h. geometrische Formen und/oder alphanumerische Zeichen.

Durch die Profilierung der Oberflächen 50, 51 ergibt sich ein sehr starker Verbund zwischen den Druckstrukturen 9,11 und dem Inlay 1. Es ist dadurch möglich, ein reißfestes, flexibles und zugleich stabiles Inlay 1 zu schaffen, das eine Antennenspule 91 trägt, die die gleiche Flexibilität besitzt wie das Inlay 1. Ein solches mit einer Antennenspule 91 bestücktes Inlay 1 ist besonders gut handhabbar und verarbeitbar.

In Ausgestaltungen kann das Inlay 1 mit weiteren Bau- oder Funktionselementen besetzt werden, etwa mit Sensorelementen. Das Inlay 1 kann ferner weitere Ausnehmungen aufweisen, z.B. für weitere Bauelemente oder für Durchkontaktierungen. Ebenso kann das Inlay 1 auch ohne jede Ausnehmung 6 ausgeführt sein.

Fig. 3 zeigt eine Aufsicht auf ein mit einer Antennenspule 91 bestücktes Inlay 1. Auf die Oberfläche 50 ist die Antennespule 91 als Druckstruktur aufgebracht. Die gedruckte Antennespule 91 endet an der Ausnehmung 6. Der in dem Inlay 1 liegende Teil der Ausnehmung 6 ist vorab hergestellt z.B. durch Stanzen oder Lasern. Alternativ kann die gesamte Ausnehmung nach Zusammenführen mit dem oberen und dem unteren Schichtenaufbau hergestellt werden. Beim Einsetzen des ICs 5 wird dieser mit der Antennespule 91 verbunden. Die gestrichelte Linie begrenzt den Bereich, auf dem der obere und der untere Schichtenaufbau 20, 30 aufgebracht werden. Der auf der anderen Seite der gestrichelten Linie liegende Abschnitt des Inlays 1 bildet den Befestigungsbereich 4.

Der obere Schichtenaufbau 2 umfasst im Ausführungsbeispiel der Fig. 1 drei Schichten. Eine größere oder eine kleinere Anzahl von Schichten ist ebenso möglich. Alle Schichten werden in üblicher Weise hergestellt. Unmittelbar an das Inlay 1 grenzt eine Funktionsinnenschicht 61. Ihre Funktion ist im Ausführungsbeispiel die Bereitstellung eines Teils der Ausnehmung 6 sowie der Ausgleich der Druckstruktur 9, d.h. insbesondere der Antennenspule 91. Die Funktionsinnenschicht 61 kann weitere Funktionen erfüllen, z.B. Bauelemente oder Sicherheitselemente enthalten. Die Funktionsinnenschicht 61 kann opak, transparent oder semitransparent sein, sie kann gefärbt oder farblos sein. Die Dicke der Funktionsinnenschicht 61 beträgt zweckmäßig 50 µm bis 150 µm.

Über der Funktionsinnenschicht 61 liegt eine dünne Unterzugsschicht 62, deren Dicke etwa ein Drittel der darunter liegenden Funktionsinnenschicht 61 beträgt, d.h. etwa 20 µm bis 50 µm. Die Unterzugsschicht 62 ist vorzugsweise opak. Sie verdeckt die darunter liegenden Strukturen, insbesondere den IC 5 und die Antennenspule 91 bzw. die Druckstruktur 9. Auf die nach Außen weisende Seite der Unterzugsschicht 62 können ihrerseits gedruckte Strukturen aufgebracht sein, z.B. ein Design, d.h. geometrische Strukturen und/ oder alphanumerische Zeichen.

Über der Unterzugsschicht 62 ist eine vorzugsweise transparente Deckschicht 63 aufgebracht. Sie ist mit Informationen versehen, die die Datenseite 100 typischerweise auf eine Person individualisieren und dient als Schutzschicht. Zwischen Unterzugsschicht 62 und Deckschicht 63 kann dabei noch eine - in Fig. 1 nicht dargestellte - opake Hintergrundfolie vorgesehen sein, die mit einem Designdruck versehen ist. Eine solche Designdruckfolie bietet sich vor allem dann an, wenn die Funktionsinnenschichten 61, 65 opak sind.

Der untere Schichtenaufbau 3 umfasst im Ausführungsbeispiel der Fig. 1 ebenfalls drei Teilschichten. Direkt an das Inlay 1 grenzt wiederum eine Funktionsinnenschicht 65, die analog zur oberseitigen Funktionsinnenschicht 61 ausgeführt ist und insbesondere zur Bereitstellung eines Teils der Ausnehmung 6 sowie zum Ausgleich der Druckstruktur 11 dient. Sofern es sich bei der Druckstruktur 11 um ein Design handelt, ist die unterseitige Funktionsinnenschicht 65 zweckmäßig zumindest über dem Design transparent oder semitransparent ausgebildet.

Unter der Funktionsinnenschicht 65 liegt, analog zum oberen Schichtenaufbau 20, wiederum eine dünne Unterzugsschicht 66, die grundsätzlich wie die erste oberseitige Unterzugsschicht 62 aufgebaut ist. Sofern es sich bei der Druckstruktur 11 um ein Design handelt, weist die zweite Unterzugsschicht 66 im Bereich der Druckstruktur 11 allerdings entweder Ausnehmungen 67 oder transparente Bereiche auf. Die Unterzugsschicht 66 kann zweckmäßig auch vollständig transparent sein. Die Druckstruktur 11 beinhaltet dann zweckmäßig individualisierende Informationen, deren Beschädigung einen Manipulationsversuch anzeigt. Auf die nach außen weisende Seite der Unterzugsschicht 66 können weitere gedruckte Strukturen aufgebracht sein, z.B. ein Design, d.h. geometrische Strukturen und/ oder alphanumerische Zeichen. Zwischen Unterzugsschicht 66 und Deckschicht 68 kann wiederum auch eine - in Fig. 1 nicht dargestellte - opake Hintergrundfolie vorgesehen sein, die mit einem Designdruck versehen ist. Eine solche Designdruckfolie bietet sich vor allem dann an, wenn die Funktionsinnenschichten 61, 65 opak sind.

Den Abschluss zur Unterseite bildet wiederum eine Deckschicht 68, die vorzugsweise transparent oder semitransparent ausgeführt ist. Sie trägt wie die oberseitige Deckschicht 63ebenfalls Informationen, die die Datenseite 100 typischerweise auf eine Person individualisieren und dient als Schutzschicht.

Die Gestaltung der Schichtenaufbauten 20, 30 kann in einem weiten Rahmen variiert werden. So sind sowohl mehr oder weniger Schichten als auch Schichten mit anderen Funktionen möglich. Insbesondere kann vorgesehen sein, dass auf beiden Seiten des Inlays 1 individualisierende Informationen aufgedruckt werden, die im Falle einer Beschädigung darauf hinweisen, dass die Datenseite 100 manipuliert wurde. Ohne weiteres ist es ferner möglich, eine Datenseite 100 nur aus einem Inlay 1 und nur dem oberen Schichtenaufbau 20 oder nur dem unteren Schichtenaufbau 30 herzustellen.

Fig. 4 veranschaulicht das Verhalten einer mit einem Inlay 1 aufgebauten Datenseite 100 bei dem Versuch, die Schichtenaufbauten 20,30 von dem Inlay 1 zu trennen. Weil die Oberflächen 50,51 des Inlays 1 aus zwei verschiedenen Materialien bestehen, nämlich den Fäden 21, 22 der Gewebeschicht 20,30 und dem Kunststoffmaterial 41 der Kunststoffschicht 40, lassen sich zu einer unmittelbar angrenzenden Schicht eines Schichtenaufbaus 20,30 unterschiedliche Verbundwerte einstellen. Der Verbund zwischen den Fäden 21, 22 und dem Material der angrenzenden Schicht kann beispielsweise größer sein als der Verbund zwischen dem Kunststoffmaterial der Kunststoffschicht 40 und der angrenzenden Schicht. Wird dann versucht, das Inlay 1 und die angrenzende Schicht durch Abheben zu trennen, kommt es zu unregelmäßigen Materialabrissen. Durch die profilierte Beschaffenheit der Oberflächen 50, 51 wird der Effekt verstärkt. Die Profilierung bewirkt einen ungleichmäßigen Verlauf der Trenn- bzw. Haftungskräfte.

Dies ist in Fig. 4 veranschaulicht. Beispielhaft gezeigt ist eine Situation, in der der untere Schichtenaufbau 30 von der unteren Oberfläche 51 eines Inlays 1 abgelöst wird. Angenommen ist, dass der Verbund zwischen den Fäden 21, 22 und der unmittelbar angrenzenden Schicht des unteren Schichtenaufbaus 30, für die entsprechend dem Beispiel der Fig. 1 nachfolgend die Funktionsinnenschicht 65 gesetzt wird, kleiner ist als der Verbund zwischen dem Kunststoffmaterial 41 und der Funktionsinnenschicht 65. Weiter ist angenommen, dass der Verbund zwischen dem Kunststoffmaterial 41 und der Druckstruktur 11 größer ist als der Verbund zwischen der Druckstruktur 11 und der Funktionsinnenschicht 65. Weiter ist angenommen, dass der Verbund zwischen den Fäden 21,22 und der Druckstruktur 11 größer ist als der Verbund zwischen dem Kunststoffmaterial 41 und der Druckstruktur 11. Weiter ist angenommen, dass der Verbund zwischen der Funktionsinnenschicht 65 und der Druckstruktur 11 zumindest teilweise größer ist als der interne Verbund der Druckstruktur 11.

Mit diesen Annahmen entstehen beim Trennen, abhängig von den genauen Unterschieden in den Verbundwerten und den Durchführungsbedingungen, regelmäßig oder unregelmäßig Restmaterialinseln auf dem Inlay 1. Dort, wo die Funktionsinnenschicht 65 direkt an dem Inlay 1 anlag, entstehen auf dem Kunststoffmaterial 41 Restmaterialinseln 80 bestehend aus dem Material der Funktionsinnenschicht 65; vorzugsweise entstehen diese Restmaterialinseln 80 in den Zwischenflächen 42. Vereinzelt kann auch das Kunststoffmaterial der Zwischenflächen 42 ausbrechen, so dass auf der Funktionsinnenschicht 65 Restmaterialinseln 82 bestehend aus dem Kunststoffmaterial 41 entstehen. Dort, wo die Funktionsinnenschicht 65 an der Druckstruktur 11 anlag, brechen aus der Druckstruktur 11 Teile aus und es entstehen auf der entfernten Funktionsinnenschicht 65 Restmaterialinseln 81 bestehend aus dem für die Druckstruktur 11 verwendeten Druckmaterial.

Es versteht sich von selbst, dass mit anderen Einstellungen der Verbundwerte andere Abreißverhalten entstehen. Die Darstellung in Fig. 4 ist entsprechend lediglich beispielhaft, um das Prinzip zu veranschaulichen. Reale Situationen können bezüglich Lage, typischer Verteilung und Größe der Restmaterialinseln stark abweichend ausfallen.

Wird versucht, das Inlay 1 nicht durch Abreißen sondern durch Schneiden von den Schichtenaufbauten 20, 30 zu trennen, bewirkt die profilierte Beschaffenheit der Oberflächen 50, 51, dass entweder die Oberflächen 50, 51 beschädigt werden, indem die erhabene Gewebestruktur abgeschnitten wird, oder Materialreste in den Zwischenflächen 42 verbleiben. In beiden Fällen ist das Inlay 1 leicht als manipuliert zu erkennen.

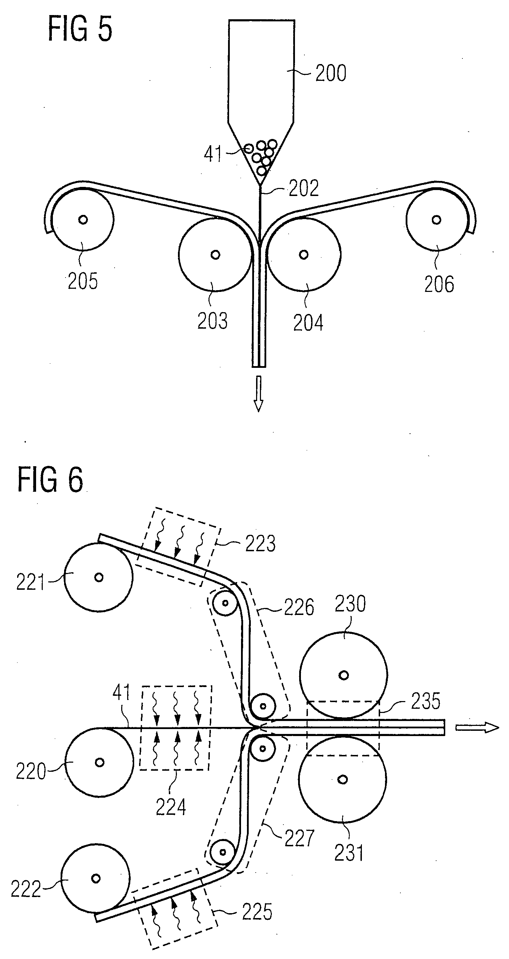

Fig. 5 veranschaulicht die prinzipiellen Komponenten einer Anordnung zur Herstellung einer Inlay-Folie durch Extrusion. Die Anordnung besteht im Kern aus einem Extruder 200, zwei Spenderrollen 205, 206 mit Gewebematerial für die Gewebeschichten 20, 30 sowie zwei Anordnungen von Heiz- und Kühlwalzen 203, 204. Die Gewebespenderrollen und die Heiz- und Kühlwalzenanordnungen sind jeweils auf gegenüberliegenden Seiten eines durch einen Pfeil angedeuteten Extrusionshauptpfades angeordnet. Das Kunststoffmaterial 41 wird als Granulat im Extruder 200 bereitgestellt, das Gewebematerial in Rollenform. Aus dem Extruder 200 wird ein Schmelzestrom 202 von Kunststoffmaterial 41 erzeugt. Dem Schmelzestrom 202 können Zusätze zugefügt werden, z.B. Sicherheitselemente. In den nachgeschalteten Heiz- und Kühlwalzenanordnungen 203, 204 wird der Schmelzestrom 202 im Fließzustand von beiden Seiten mit Gewebematerial belegt und anschließend gekühlt. Es entsteht die Inlay-Folie. Sie wird aufgerollt und in Rollenform bereitgestellt. Aus der Inlay-Folie werden die Inlays 1 herausgetrennt. Das Heraustrennen erfolgt durch Stanzen, Schneiden, Laserschneiden, Wasserstrahlschneiden oder vergleichbare Trenntechniken.

Fig. 6 veranschaulicht stark schematisiert eine Anordnung zur Herstellung einer Inlayfolie durch Laminieren. Das Kunststoffmaterial 41 wird in diesem Fall in Form einer Folie bereitgestellt. Die Folie befindet sich auf einer Folienspenderrolle 220. Die Anordnung umfasst weiter zwei Gewebespenderrollen mit Gewebematerial für die Gewebeschichten, an den Transportwegen von Folie und Gewebematerial angeordnete Heizsysteme 223, 224, 225 zum Erwärmen der von der Folienspenderrolle 220 und den Gewebespenderrollen 221, 222 zugeführten Materialien, Umlenkrollensysteme 226,227 zum Zusammenführen der Inlayfolie und der Gewebematerialien sowie zwei Heiz- und Kühlwalzenanordnungen 230, 231, die beidseitig der durch einen Pfeil angedeuteten Laminierhauptrichtung angeordnet sind. Die vorgewärmten Gewebematerialien sowie die vorgewärmte Kunststoffmaterialfolie werden im Laminierbereich 235 zwischen den Heiz- und Kühlwalzenanordnungen 230,231 zusammengeführt und unter Druck und Wärme miteinander verbunden. Die entstehende Inlay-Folie wird gekühlt, aufgerollt und in Rollenform bereitgestellt. Aus der Inlay-Folie werden die Inlays 1 herausgetrennt. Das Heraustrennen erfolgt wiederum durch Stanzen, Schneiden, Laserschneiden, Wasserstrahlschneiden oder vergleichbare Trenntechniken.

Unter Beibehaltung des grundlegenden Gedankens, ein Inlay 1 bereitzustellen, das vorzugsweise zwei Gewebeschichten 20, 30 aufweist, die unter sandwichartiger Zwischenlage einer Kunststoffschicht 40 zu einer Einheit verbunden sind, die profilierte Oberflächen 50, 51 aufweist, welche zum einen von der erhabenen Gewebestruktur der Gewebeschichten 20, 30 und zum anderen von dazwischen liegendem Kunststoffmaterial 41 gebildet sind, gestattet die Erfindung eine Vielzahl von Ausgestaltungen, die hier nicht im einzelnen beschrieben sind. Beispielsweise können die technischen Daten des für die Gewebeschichten 20, 30 verwendeten Gewebematerials in einem breiten Rahmen variiert werden. Dies gilt unter anderem für die Größe der Maschen, die Fadenstärke oder die Art der Fadenverwirkung. Auch können für das Gewebematerial Materialien mit besonderen chemischen, physikalischen oder biologischen Eigenschaften eingesetzt werden. Gewebematerial und Kunststoffmaterial 41 können mit Zusatzstoffen versehen werden, die durch Zusammenwirken ein Sicherheitselement bilden. Gewebematerial und Kunststoffmaterial 41 können ferner mit Zusatzstoffen versehen werden, die dazu dienen, gezielt bestimmte Verbundwerte zur nächsten angrenzenden Schicht einzustellen oder die dazu dienen, die Profilierung der Oberflächen 50,51 zu beeinflussen, indem etwa die Zwischenflächen 42 zwischen den Fäden 21, 22 besonders tiefe Mulden ausbilden. In einem weiten Rahmen gestaltet werden kann auch der Aufbau von ein Inlay 1 enthaltenden Datenträgern. Hier können insbesondere andere Schichtfolgen und variierende Flächenabmessungen gewählt werden.

## Patentansprüche

1. Inlay für einen kleinformatigen, mehrschichtigen, tragbaren Datenträger, wobei das Inlay eine Gewebeschicht (20, 30) aufweist, die innig mit einer Kunststoffschicht (40) verbunden ist, welche die Maschen (23) des Gewebes ausfüllt, so dass das Inlay (1) eine geschlossene Oberfläche (50, 51) aufweist, die zum einen von der erhabenen Gewebestruktur der Gewebeschicht (20,30) und zum anderen von dazwischen liegendem Zwischenflächen (42) aus Kunststoffmaterial (41) gebildet ist, **dadurch gekennzeichnet dass** die geschlossene Oberfläche (50,51) des Inlays profiliert ist.

2. Inlay nach Anspruch 1, **dadurch gekennzeichnet, dass** auf der profilierten Oberfläche (50,51) eine Druckstruktur (9,11) ausgebildet ist, die sowohl einen Teil der erhabenen Gewebestruktur als auch einen Teil des dazwischen liegenden Kunststoffmaterials (41) überdeckt.

3. Inlay nach Anspruch 1 oder 2, **dadurch gekennzeichnet, dass** es eine zweite Gewebeschicht (30) aufweist, die auf der ersten Gewebeschicht (20) abgewandten Seite der Kunststoffschicht (40) angeordnet ist.

4. Inlay nach einem der Anspruch 2 oder 3, **dadurch gekennzeichnet, dass** die Druckstruktur (9,11) einen Teil eines elektronisches Bauelementes (91) bildet.

5. Inlay nach einem der vorhergehenden Ansprüche, **dadurch gekennzeichnet, dass** die Fäden (21, 22) der Gewebeschicht (20, 30) transparent sind.

6. Inlay nach einem der vorhergehenden Ansprüche, **dadurch gekennzeichnet, dass** das Kunststoffmaterial (40) transparent ist.

7. Inlay nach einem der vorhergehenden Ansprüche, **dadurch gekennzeichnet, dass** die Dicke der Fäden (21, 22) 10 bis 100µm, vorzugsweise 20 bis 60 µm, beträgt und die Breite der Maschen (23) 2 bis 50 µm, vorzugsweise 5 bis 15 µm.

8. Inlay nach einem der vorhergehenden Ansprüche, **dadurch gekennzeichnet, dass** die Fäden (21, 22) der Gewebeschicht (20, 30) ein Sicherheitsmerkmal tragen.

9. Inlay nach einem der vorhergehenden Ansprüche, **dadurch gekennzeichnet, dass** die profilierte Oberfläche (50, 51) eine optisch und/ oder haptisch erkennbare charakteristische Struktur besitzt, die ein Echtheitsmerkmal bildet.

10. Inlay nach einem der vorhergehenden Ansprüche, **dadurch gekennzeichnet, dass** der Verbund zwischen den Fäden (21,22) und der Druckstruktur (11) größer ist als der Verbund zwischen dem Kunststoffmaterial (41) und der Druckstruktur (11).

11. Verfahren zur Herstellung eines Inlays für einen kleinformatigen, mehrschichtigen, tragbaren Datenträger, **gekennzeichnet durch** folgende Schritte:
Bereitstellen einer Gewebeschicht (20, 30),
Verbinden der Gewebeschicht (20, 30) mit einer Kunststoffschicht (40) **durch** Coextrusion oder **durch** Laminieren, so dass eine geschlossene profilierte Oberfläche (50,51) entsteht, die einerseits von der erhabenen Gewebestruktur der Gewebeschicht (20, 30) und anderseits von dazwischen liegenden Zwischenflächen (42) aus Kunststoffmaterial (41) gebildet ist.

12. Verfahren nach Anspruch 11, **dadurch gekennzeichnet, dass** zwei Gewebeschichten (20, 30) bereitgestellt werden und die Kunststoffschicht (40) gleichzeitig mit beiden verbunden wird.

13. Verfahren nach Anspruch 11 oder 12, **dadurch gekennzeichnet, dass** auf die profilierte Oberfläche (50,51) eine Druckstruktur (9,11) so aufgebracht wird, dass sie sowohl einen Teil der erhabenen Gewebestruktur als auch einen Teil der Zwischenflächen (42) überdeckt.

14. Verfahren zur Herstellung einer Datenseite, die einen flexiblen hervorstehenden Befestigungsbereich aufweist, **gekennzeichnet durch** folgenden Schritte:
Bereitstellen von Schichtaufbauten (2, 3) mit den Sollabmessungen der Datenseite,
Herstellen eines Inlays (1) nach dem Verfahren gemäß Anspruch 11, welches an zumindest einer Seite die Sollabmessungen übertrifft, Verbinden des Inlays (1) mit den Schichtaufbauten (2, 3) **durch** Laminieren oder Kleben.

15. Verwendung eines Inlays gemäß Anspruch 1 zur Herstellung einer Datenseite (100) durch Verbinden des Inlays (1) mit wenigstens einem weiteren Schichtaufbau (2, 3).

## Claims

1. An inlay for a small-sized, multilayer, portable data carrier, wherein the inlay has a fabric layer (20, 30) which is intimately connected with a plastic layer (40) filling the mesh (23) of the fabric, so that the inlay (1) has a closed surface (50, 51) formed on the one hand by the raised fabric structure of the fabric layer (20, 30) and on the other hand by interjacent intermediate areas (42) of plastic material (41), **characterized in that** the closed surface (50, 51) of the inlay is profiled.

2. The inlay according to claim 1, **characterized in that** on the profiled surface (50, 51) a printed structure (9, 11) is formed which covers both a part of the raised fabric structure and a part of the interjacent plastic material (41).

3. The inlay according to claim 1 or 2, **characterized in that** it has a second fabric layer (30) arranged on the side of the plastic layer (40) facing away from the first fabric layer (20).

4. The inlay according to any of the claims 2 or 3, **characterized in that** the printed structure (9, 11) forms a part of an electronic component (91).

5. The inlay according to any of the preceding claims, **characterized in that** the threads (21, 22) of the fabric layer (20, 30) are transparent.

6. The inlay according to any of the preceding claims, **characterized in that** the plastic material (40) is transparent.

7. The inlay according to any of the preceding claims, **characterized in that** the thickness of the threads (21, 22) amounts to 10 to 100 µm, preferably 20 to 60 µm, and the width of the mesh (23) 2 to 50 µm, preferably 5 to 15 µm.

8. The inlay according to any of the preceding claims, **characterized in that** the threads (21, 22) of the fabric layer (20, 30) bear a security feature.

9. The inlay according to any of the preceding claims, **characterized in that** the profiled surface (50, 51) has an optically and/or haptically recognizable characteristic structure which forms an authenticity feature.

10. The inlay according to any of the preceding claims, **characterized in that** the bond between the threads (21, 22) and the printed structure (11) is greater than the bond between the plastic material (41) and the printed structure (11).

11. A method for manufacturing an inlay for a small-sized, multilayer, portable data carrier, **characterized by** the following steps of:
making available a fabric layer (20, 30),
connecting the fabric layer (20, 30) with a plastic layer (40) by coextrusion or by lamination, so that a closed profiled surface (50, 51) is created which is formed on the one hand by the raised fabric structure of the fabric layer (20, 30) and on the other hand by interjacent intermediate areas (42) of plastic material (41).

12. The method according to claim 11, **characterized in that** two fabric layers (20, 30) are made available and the plastic layer (40) is simultaneously connected to both.

13. The method according to claim 11 or 12, **characterized in that** to the profiled surface (50, 51) a printed structure (9, 11) is so applied that it covers both a part of the raised fabric structure and a part of the intermediate areas (42).

14. A method for manufacturing a data page having a flexible protruding attachment region, **characterized by** the following steps of:
making available layer structures (2, 3) with the required dimensions of the data page,
manufacturing an inlay (1) according to the method of claim 11, which exceeds the required dimensions on at least one side,
connecting the inlay (1) with the layer structures (2, 3) by lamination or adhesive bonding.

15. Use of an inlay according to claim 1 for manufacturing a data page (100) by connecting the inlay (1) with at least one further layer structure (2, 3).

## Revendications

1. Intercalaire destiné à un support de données portable multicouche de petit format, l'intercalaire comportant une couche de tissu (20, 30) intimement jointe à une couche de matière plastique (40) qui remplit les mailles (23) du tissu, de telle sorte que l'intercalaire (1) présente une surface (50, 51) fermée constituée d'une part par la structure surélevée du tissu de la couche de tissu (20, 30) et d'autre part par des superficies intermédiaires (42) en matériau en matière plastique (41) interposées, **caractérisé en ce que** la surface (50, 51) fermée de l'intercalaire est profilée.

2. Intercalaire selon la revendication 1, **caractérisé en ce que**, sur la surface (50, 51) profilée, une structure d'impression (9, 11) est réalisée, laquelle recouvre tant une partie de la structure surélevée du tissu qu'une partie du matériau en matière plastique (41) y étant interposé.

3. Intercalaire selon la revendication 1 ou 2, **caractérisé en ce qu'**il comporte une deuxième couche de tissu (30) agencée sur le côté de la couche de matière plastique (40) tourné à l'opposé de la première couche de tissu (20).

4. Intercalaire selon une des revendications 2 ou 3, **caractérisé en ce que** la structure d'impression (9, 11) constitue une partie d'un composant électronique (91).

5. Intercalaire selon une des revendications précédentes, **caractérisé en ce que** les fils (21, 22) de la couche de tissu (20, 30) sont transparents.

6. Intercalaire selon une des revendications précédentes, **caractérisé en ce que** le matériau en matière plastique (40) est transparent.

7. Intercalaire selon une des revendications précédentes, **caractérisé en ce que** l'épaisseur des fils (21, 22) est de 10 à 100 µm, de préférence de 20 à 60 µm, et **en ce que** la largeur des mailles (23) est de 2 à 50 µm, de préférence de 5 à 15 µm.

8. Intercalaire selon une des revendications précédentes, **caractérisé en ce que** les fils (21, 22) de la couche de tissu (20, 30) portent une caractéristique de sécurité.

9. Intercalaire selon une des revendications précédentes, **caractérisé en ce que** la surface (50, 51) profilée possède une structure caractéristique qui est reconnaissable optiquement et/ou au toucher et constitue une caractéristique d'authenticité.

10. Intercalaire selon une des revendications précédentes, **caractérisé en ce que** l' adhérence entre les fils (21, 22) et la structure d'impression (11) est supérieure à l' adhérence entre le matériau en matière plastique (41) et la structure d'impression (11).

11. Procédé de fabrication d'un intercalaire destiné à un support de données portable multicouche de petit format, **caractérisé par** les étapes suivantes:
mise à disposition d'une couche de tissu (20, 30),
jonction de la couche de tissu (20, 30) avec une couche de matière plastique (40) par coextrusion ou par laminage, de telle sorte qu'une surface (50, 51) profilée fermée est engendrée, laquelle est constituée d'une part par la structure surélevée du tissu de la couche de tissu (20, 30) et d'autre part par des superficies intermédiaires (42) en matériau en matière plastique (41) interposées.

12. Procédé selon la revendication 11, **caractérisé en ce que** deux couches de tissu (20, 30) sont mises à disposition et la couche de matière plastique (40) est jointe en même temps aux deux.

13. Procédé selon la revendication 11 ou 12, **caractérisé en ce que**, sur la surface (50, 51) profilée, une structure d'impression (9, 11) est appliquée de telle façon qu'elle recouvre tant une partie de la structure surélevée du tissu qu'une partie des superficies intermédiaires (42).

14. Procédé de fabrication d'une page de données ayant une zone flexible saillante de fixation, **caractérisé par** les étapes suivantes:
mise à disposition de structures de couches (2, 3) ayant les dimensions de consigne de la page de données,
fabrication d'un intercalaire (1) suivant le procédé conforme à la revendication 11, lequel dépasse en au moins un côté les dimensions de consigne,
jonction de l'intercalaire (1) avec les structures de couches (2, 3) par laminage ou collage.

15. Utilisation d'un intercalaire selon la revendication 1 pour la fabrication d'une page de données (100) par jonction de l'intercalaire (1) avec au moins une autre structure de couches (2, 3).
